# EUROPÄISCHE PATENTANMELDUNG

(11) **EP 1 595 779 A1**
(43) Veröffentlichungstag der Anmeldung: **16.11.2005**
(21) Anmeldenummer: 05010037.9
(22) Anmeldetag: 09.05.2005
(51) Int. Cl.: B62K 27/12, B60D 1/02

(54) **Anhängerkupplung für ein Zweirad**

(30) Priorität: 10.05.2004 DE 202004007450 U
(71) Anmelder: Fischer, Jürgen, 72127 Kusterdingen (DE)
(72) Erfinder: Fischer, Jürgen, 72127 Kusterdingen (DE)
(74) Vertreter: Heuer, Wilhelm

(57) **Zusammenfassung**

Eine Anhängerkupplung für ein Zweirad hat ein zweiradseitiges und ein anhängerseitiges Kupplungsteil (1,15), ein Brückenteil (6), das um eine erste Achse schwenkbar an das zweiradseitige Kupplungsteil (1) und um eine senkrecht zu der ersten Achse ausgerichtete zweite Achse an das anhängerseitige Kupplungsteil (15) angelenkt ist, und wenigstens einen Schnellspanner (16), der als die zweite Achse zwischen dem Brückenteil (6) und einem der Kupplungsteile (1,15) montierbar und zum Lösen der Kupplung entfernbar ist.

## Beschreibung

Die vorliegende Erfindung betrifft eine Anhängerkupplung zum Anschließen eines Anhängers, insbesondere eines nicht lagestabilen Anhängers, an ein Zweirad.

Ein Zweirad muss sich bekanntlich zum Kurvenfahren schräg legen. Wenn ein solches Fahrrad einen lagestabilen Anhänger mit zwei auf einer gleichen Achse montierten Rädern zieht, so darf eine Kupplung zwischen dem Fahrrad und dem Anhänger keine zur Fahrtrichtung parallele Vektorkomponente des Drehmoments übertragen, da andernfalls der Anhänger ein Schräglegen des Fahrrads behindern würde und somit keine Kurven gefahren werden könnten. Die Kupplung für einen nicht lagestabilen Anhänger muss jedoch solche Drehmomente übertragen können, um ein Umstürzen des Anhängers zu vermeiden.

Bei einem solchen nicht lagestabilen Anhänger kann es sich insbesondere um ein sogenanntes Trailerbike handeln, ein z.B. aus US 5,067,738 bekanntes, meist für Kinder verwendetes fahrradähnliches Gefährt mit Sattel, Pedalen und einem von den Pedalen angetriebenen Hinterrad, bei dem allerdings das Vorderrad durch eine Kupplung an den Rahmen eines voranfahrenden Zweirades ersetzt ist, oder um ein vollständiges, durch eine Führungsstange an ein voranfahrendes Rad gekoppeltes Zweirad.

Eine Anhängerkupplung zum Kuppeln eines nicht lagestabilen Anhängers an ein Zweirad nach dem Oberbegriff des Anspruchs 1 ist aus DE 297 05 180 U1 bekannt. Ein zweiradseitiges Kupplungsteil dieser Kupplung weist einerseits eine Spannhülse, die auf eine Sattelstütze des Fahrrads aufgesteckt und daran festgezogen werden kann, und andererseits eine Gabel auf, in die ein Kopf eines Brückenteils um eine lotrechte Achse schwenkbar eingreift. Über eine zweite, horizontale Achse ist ein anhängerseitiges Kupplungsteil schwenkbar mit dem Brückenteil verbunden. Die Kupplung hat somit zwei Schwenkfreiheitsgrade mit zur Fahrtrichtung senkrechten Achsen, eine zur Fahrtrichtung parallele Komponente des Drehmoments wird jedoch zwischen Zweirad und Anhänger übertragen.

Die schwenkbare Verbindung zwischen dem zweiradseitigen Kupplungsteil und dem Brückenteil ist hergestellt durch einen Schnellspanner eines ähnlichen Typs, wie er z.B. auch häufig für die Aufhängung eines Fahrrad-Vorderrades verwendet wird. Der Schnellspanner hat einen Schaft, der sich durch Bohrungen der Gabel des zweiradseitigen Kupplungsteils und des Kopfs des Brückenteils erstreckt und der an einem Ende ein Gewinde mit einer aufgeschraubten Mutter aufweist und am anderen Ende von einem Exzenterhebel gehalten ist. Durch Umlegen des Exzenterhebels wird der Schnellspanner festgezogen oder gelockert, wobei im gelockerten Zustand ohne Werkzeug die Mutter vom Gewinde gedreht werden und der Schnellspanner abgezogen werden kann, um Fahrrad und Anhänger voneinander zu trennen.

Mit dieser bekannten Anhängerkupplung wird zwar eine präzise führende und schnell schließ- und lösbare Verbindung zwischen Fahrrad und Anhänger geschaffen, es kann jedoch das Problem auftreten, dass die zum Betätigen des Schnellspanners erforderliche Bewegungsfreiheit nicht vorhanden ist, weil die Gabel des zweiradseitigen Kupplungsteils sich unterhalb des Sattels des Zweirades befindet und der Hebel des Schnellspanners beim Anziehen oder Lösen gegen den Sattel stößt. Es wäre zwar im Prinzip denkbar, den Schnellspanner mit nach oben, dem Sattel zugewandter Mutter und nach unten gewandtem Spannhebel zu montieren, doch löst dies das Problem nicht, da dann die Gefahr besteht, dass der Spannhebel durch den Gepäckträger des Fahrrads blockiert wird.

Aufgabe der Erfindung ist, die aus DE 297 05 180 U1 bekannte Anhängerkupplung dahingehend weiter zu entwickeln, dass eine Blockierung des schnellspanners durch Teile des Zweirades ausgeschlossen ist.

Im einfachsten Fall wird die Aufgabe dadurch gelöst, dass der Schnellspanner als die zweite Achse des Kupplungsteils montierbar ist, die notwendigerweise weiter von der Sattelstütze entfernt ist als die erste Achse und daher weniger Gefahr läuft, dass die Bewegung des Schnellspannhebels durch den Sattel behindert wird.

Vorzugsweise ist die erste Achse der Kupplung lotrecht und die zweite Achse waagrecht orientiert. In diesem Fall bewegt sich der Spannhebel des Schnellspanners in einer horizontalen Ebene, so dass unabhängig von der Entfernung der zweiten Achse von der Sattelstütze eine Blockierung des Spannhebels durch Sattel oder Gepäckträger ohnehin ausgeschlossen ist.

Die erste Achse zwischen dem zweiradseitigen Kupplungsteil und dem Brückenteil kann dauerhaft montiert sein. Einer bevorzugten Ausgestaltung zufolge ist allerdings der Schnellspanner wahlweise als erste oder zweite Achse montierbar. Ein Benutzer kann somit wählen, an welcher Stelle er den Schnellspanner verwendet, und kann ihn als erste Achse einsetzen, falls er in dieser Position ungehindert betätigbar ist, und ihn anderenfalls als zweite Achse einsetzen, wobei in diesem Fall das Brückenteil am Zweirad verbleibt, wenn die Kupplung gelöst wird. Die jeweils andere Achse ist vorzugsweise durch eine Schraube gebildet, so dass ein Benutzer im Bedarfsfall beide Achsen ausbauen und gegeneinander vertauschen kann.

Weitere Merkmale und Vorteile der Erfindung ergeben sich aus der nachfolgenden Beschreibung eines Ausführungsbeispiels mit Bezug auf die beigefügten Figuren. Es zeigen:
- Fig. 1: eine auseinander gezogene Darstellung einer ersten Ausgestaltung der Anhängerkupplung in Seitenansicht;
- Fig. 2: eine Darstellung in Draufsicht;
- Figs. 3,: 4 eine zweite Ausgestaltung der Erfindung in zu Figs. 1 und 2 analogen Darstellungen; und
- Figs. 5-7: jeweils Darstellungen verschiedener Ausgestaltungen eines Brückenteils des Gelenks und darin aufgenommener Gleitlager

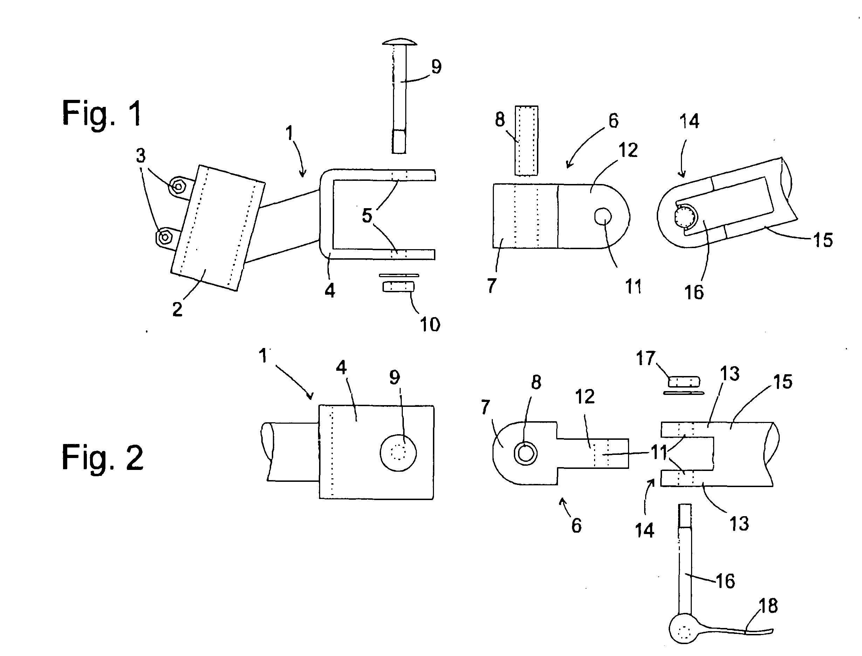

In Fig. 1 ist ein zweiradseitiges Kupplungsteil mit 1 bezeichnet. Es umfasst eine geschlitzte Hülse 2, die vorgesehen ist, um sie auf eine (nicht dargestellte) Sattelstütze eines Fahrrades aufzustecken und an dieser mit Hilfe von Spannschrauben 3 drehfest anzuklemmen. Alternativ könnte die Hülse 2 auch aus zwei miteinander verschraubten halbzylindrischen, die Sattelstütze umgreifenden Schalen zusammengesetzt sein; dies hat den Vorteil, dass das Kupplungsteil durch Auseinanderschrauben der Halbschalen vom Fahrrad abmontiert werden kann, ohne dass der Sattel gelöst werden muss.

Mit der Hülse 2 ist eine Gelenkgabel 4 über ein Zwischenstück verschweißt. Eine vertikale Bohrung 5 erstreckt sich durch beide Schenkel der Gelenkgabel 4.

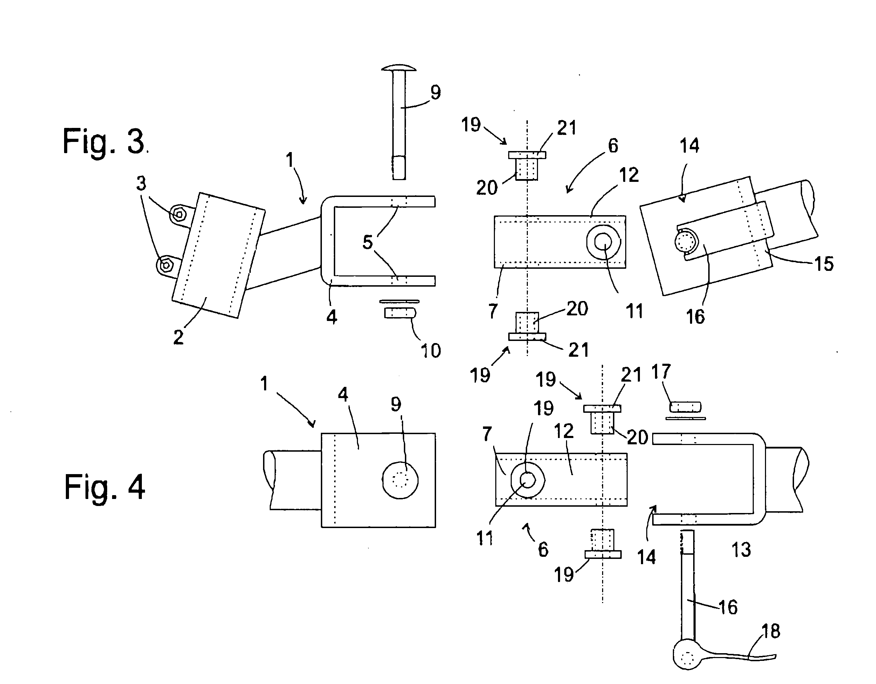

Ein Brückenteil 6 hat einen zwischen die Schenkel der Gelenkgabel 4 eingreifenden Kopf 7 mit einer vertikalen Bohrung. Das Brückenteil ist in der Fig. als ein massives Teil, vorzugsweise aus Metall, dargestellt; es könnte unter geringfügiger Abwandlung seiner äußeren Gestalt auch beispielsweise aus einem Stück kräftigen vierkantrohrs gebildet sein, wie in Figs 3 und 4 gezeigt.

Die Bohrung des Kopfs 7 nimmt eine zylindrische Hülse 8 auf. Die Länge der Hülse 8 entspricht dem Abstand zwischen den zwei Schenkeln der Gelenkgabel 4 und ist geringfügig größer als die Länge der sie aufnehmenden Bohrung im Kopf 7. Das Kupplungsteil 1 und das Brückenteil 6 werden verbunden durch eine Schraube 9, die sich nacheinander durch eine der Bohrungen 5, durch die Hülse 8 und die andere Bohrung 5 erstreckt und mit einer Mutter 10 gekontert ist. Die von Schraube 9 und Mutter 10 gegeneinander gedrückten Schenkel der Gabel 4 sind durch die Hülse 8 abgestützt. Die Hülse kann somit drehfest zwischen den Schenkeln der Gabel 4 eingeklemmt sein, das Brückenteil 6 bleibt aber in jedem Fall um die von Schraube 9 und Hülse 8 festgelegte vertikale Achse drehbar.

Der alternativen Ausgestaltung der Figs. 3 und 4 zufolge ist die Hülse 8 durch zwei Gleitlager 19 aus Metall oder Kunststoff ersetzt, die jeweils einen in die Bohrung des Kopfs 7 eingreifenden Schaftabschnitt 20 und einen zwischen dem Kopf 7 und einem gegenüberliegenden Schenkel der Gabel 4 zu liegen kommenden Flanschabschnitt 21 aufweisen. Die von Schraube 9 und Mutter 10 gegeneinander gedrückten Schenkel der Gabel 4 sind durch die Gleitlager 19 abgestützt, wobei bei einem geringfügigen Verschleiß der Gleitlager 19 der Anpressdruck durch Nachziehen der Mutter 10 ausgeglichen werden kann.

Eine horizontale Bohrung 11 erstreckt sich durch einen zweiten Kopf 12 des Brückenteils 6 sowie durch zwei Schenkel 13 einer Gelenkgabel 14, die ein mit dem Anhänger fest verbundenes Kupplungsteil 15 bildet.

Anhängerseitiges Kupplungsteil 15 und Brückenteil 6 sind zusammengehalten durch einen Schnellspanner 16 und eine auf diesen geschraubte Mutter 17.

Die Schenkel 13 der Gelenkgabel 14 sind beim Ausführungsbeispiel der Figs 1 und 2 Figur stärker dargestellt als die der Gelenkgabel 4, und es wird davon ausgegangen, dass die von dem Schnellspanner 16 und der Mutter 17 ausgeübte Klemmkraft nicht ausreicht, um die Schenkel 13 gegen den Kopf 12 zu pressen und so dessen Schwenkbarkeit zu beeinträchtigen. Im Bedarfsfalle könnte aber auch hier die Bohrung 11 im Kopf 12 breiter als in den Schenkeln 13 sein und eine Hülse analog zur Hülse 8 zum Abstützen der Schenkel 13 aneinander aufnehmen.

Bei der Ausgestaltung der Figs 3 und 4 hingegen hat die Gelenkgabel 14 dieselbe Gestalt wie die Gelenkgabel 4.

Der Schnellspanner 16 und die Schraube 9 weisen jeweils gleiche Schaftlängen und -durchmesser auf, so dass sie je nach Bedürfnissen eines Benutzers gegeneinander vertauscht werden können. D.h., wenn bei einem Fahrrad, an dem die erfindungsgemäße Kupplung montiert ist, der Abstand zwischen der Gelenkgabel 4 und dem (nicht dargestellten) Sattel groß genug ist, um den Spannhebel 18 des Schnellspanners 16 betätigen zu können, wenn dieser am Ort der Schraube 9 montiert ist, so kann der Benutzer den Schnellspanner an dieser Stelle einsetzen und, wenn der Anhänger nicht benutzt wird, diesen mitsamt dem Brückenteil 6 vom Fahrrad lösen. Wenn der Platz an dieser Stelle zur Betätigung des Schnellspanners 16 nicht ausreicht, wird er, wie in den Figuren gezeigt, zwischen dem Brückenteil 6 und dem anhängerseitigen Kupplungsteil 15 verwendet. In diesem Fall bleibt, wenn der Anhänger abgehängt wird, das Brückenteil 6 am Fahrrad, im Gegenzug ist aber die Betätigbarkeit des Schnellspanners nicht eingeschränkt, wenn er in der horizontalen Bohrung eingesetzt ist.

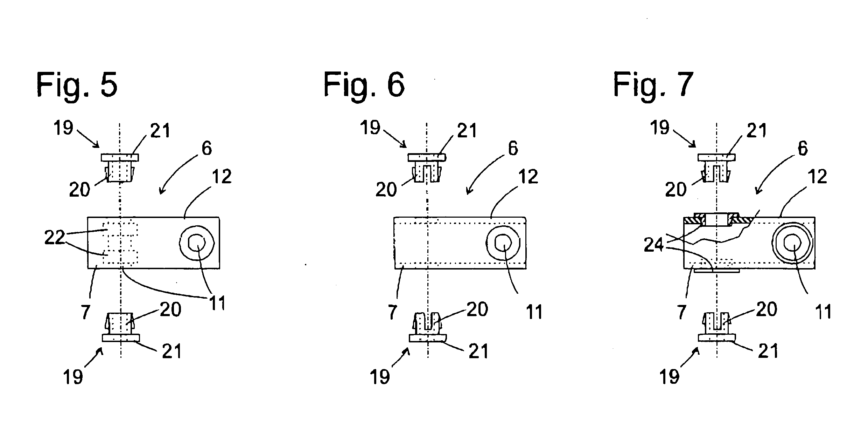

Bei dem in Fig. 4 gezeigten, reibschlüssig in die Bohrungen 11 des Brückenteils 6 eingeführten Gleitlager ergibt sich das Problem, dass der Reibschluss nach kurzer Benutzungszeit der Kupplung verloren gehen kann. Das Lösen und insbesondere das Neuzusammenfügen der Kupplung wird dann sehr beschwerlich, da ständig Gefahr besteht, dass das untere der zwei Gleitlager 19 aus der Bohrung herausfällt, bevor das Brückenteil 6 so weit in die Gelenkgabel 4 eingeführt werden kann, dass diese die Gleitlager festhält. Bei der Ausgestaltung der Fig. 5 wird dieses Problem vermieden, indem anstelle eines reibschlüssigen Eingriffs zwischen den Gleitlagern 19 und der Bohrung 11 ein formschlüssiger Eingriff hergestellt wird, indem die Gleitlager mit von ihrem Schaftabschnitt 20 abstehenden Rastnasen 21 ausgebildet sind, die, wenn der Schaftabschnitt 20 in die Bohrung 11 eingeführt ist, in eine Hinterschneidung 22 dieser Bohrung eingreifen und so ein Herausfallen unmöglich machen. Das Brückenteil 6 ist in Fig. 5 als ein im Wesentlichen massiver Metallblock, z.B. aus Aluminium, ausgebildet, durch den rechtwinklig zueinander die Bohrungen 11 verlaufen, und wobei die Bohrungen bereichsweise aufgeweitet sind, um die Hinterschneidungen 22 zu bilden. Anstelle eines solchen massiven Brückenteils kann selbstverständlich auch das in den Figs. 3 und 4 gezeigte Brückenteil aus Vierkantrohr zum Einsatz kommen, wobei hier der Hohlraum im Innern des vierkantrohrs die Funktion der Hinterschneidung 22 übernimmt.

Um das Verrasten der Gleitlager 19 im Brückenteil 6 zu erleichtern, können erstere, wie in Fig. 6 gezeigt, jeweils in ihrem Schaftabschnitt 20 einen Schlitz 23 aufweisen, so dass die zwei die Rastnasen 21 tragenden Hälften des Schaftabschnitts 20 beim Einstecken des Schaltabschnitts 20 in die Bohrung gegeneinander gedrückt werden können.

Bei der Ausgestaltung der Fig. 7 ist in den Bohrungen 11 des Brückenteils 6 jeweils eine Kunststoffhülse 24 verpresst, in der wiederum jeweils ein Gleitlager 19 verrastet ist. Bei einer Drehung des Brückenteils 6 gleiten Kunststoffoberflächen der Hülse 24 und des Gleitlagers 19 aneinander, so dass eine Schmierung zwischen beiden entfallen kann. Es besteht daher keine Gefahr, dass ein Benutzer beim Öffnen und Schließen der Kupplung sich Hände oder Kleidung schmutzig macht.

## Patentansprüche

1. Anhängerkupplung für ein Zweirad, mit einem zweiradseitigen und einem anhängerseitigen Kupplungsteil (1, 15), einem Brückenteil (6), das schwenkbar um eine erste Achse an das zweiradseitige Kupplungsteil (1) und um eine senkrecht zu der ersten Achse ausgerichtete zweite Achse an das anhängerseitige Kupplungsteil (15) angelenkt ist, und wenigstens einem Schnellspanner (16), der als eine der Achsen zwischen dem Brückenteil (6) und einem der Kupplungsteile (1, 15) montierbar und zum Lösen der Kupplung entfernbar ist, **dadurch gekennzeichnet, dass** der Schnellspanner (16) als die zweite Achse montierbar ist.

2. Anhängerkupplung nach Anspruch 1, **dadurch gekennzeichnet, dass** die erste Achse dauerhaft montiert ist.

3. Anhängerkupplung nach Anspruch 1, **dadurch gekennzeichnet, dass** der Schnellapanner (16) wahlweise als erste oder zweite Achse montierbar ist.

4. Anhängerkupplung nach Anspruch 3, **dadurch gekennzeichnet, dass** die jeweils andere Achse durch eine schraube (9) gebildet ist.

5. Anhängerkupplung nach Anspruch 4, **dadurch gekennzeichnet, dass** Schnellspanner (16) und Schraube (9) in Bohrungen von gleichem Durchmesser aufgenommen sind.

6. Anhängerkupplung nach Anspruch 5, **dadurch gekennzeichnet, dass** Schnellspanner (16) und Schraube (9) gleiche Schaftdurchmesser und -längen aufweisen.

7. Anhängerkupplung nach einem der vorhergehenden Ansprüche, **dadurch gekennzeichnet, dass** die erste Achse lotrecht und die zweite Achse waagrecht orientiert ist.

8. Anhängerkupplung für ein Zweirad, mit einem zweiradseitigen und einem anhängerseitigen Kupplungsteil (1, 15), einem Brückenteil (6), das um eine erste Achse schwenkbar mit dem zweiradseitigen Kupplungsteil (1) und um eine senkrecht zu der ersten Achse ausgerichtete zweite Achse an das anhängerseitige Kupplungsteil (15) angelenkt ist, und wenigstens einem Schnellspanner (16), der als eine der Achsen zwischen dem Brückenteil (6) und einem der Kupplungsteile (1, 15) montierbar und zum Lösen der Kupplung entfernbar ist, insbesondere nach einem der vorhergehenden Ansprüche, **dadurch gekennzeichnet, dass** von anhänger- oder zweiradseitigem Kupplungsteil (15, 1) einerseits und Brückenteil (6) andererseits jeweils ein Teil eine Gabel (4) bildet, in die ein Kopf (7) des jeweils anderen Teils eingreift, und dass in eine Bohrung (5) des Kopfs (7) eine aus der Bohrung (5) überstehende, in Bezug auf den Kopf (7) drehbare Hülse (8) formschlüssig eingreift, welche die Achse aufnimmt.

9. Anhängerkupplung nach Anspruch 8, **dadurch gekennzeichnet, dass** die Bohrung (5) eine Hinterschneidung aufweist, in der ein Vorsprung der Hülse verrastet ist.

10. Anhängerkupplung nach Anspruch 9, **dadurch gekennzeichnet, dass** der Kopf (7) als vierkantrohr ausgebildet ist, und dass der Hohlraum des vierkantrohrs die Hinterschneidung bildet.

11. Anhängerkupplung nach Anspruch 8, 9 oder 10, **dadurch gekennzeichnet, dass** zwischen einem aus der Bohrung überstehenden Flansch der Hülse und der Außenseite des Kopfes eine Unterlegscheibe aus Kunststoff angeordnet ist.

12. Anhängerkupplung nach Anspruch 11, **dadurch gekennzeichnet, dass** an die Unterlegscheibe ein in die Bohrung eingreifender Schaft angeformt ist.
